# EUROPÄISCHE PATENTSCHRIFT

(11) **EP 3 727 998 B1**
(45) Veröffentlichungstag und Bekanntmachung des Hinweises auf die Patenterteilung: **18.01.2023**
(21) Anmeldenummer: 18795973.9
(22) Anmeldetag: 24.10.2018
(51) Int. Cl.: B62D 6/00, B62D 5/00

(54) **VERFAHREN ZUM BETREIBEN EINES STEER-BY-WIRE-LENKSYSTEMS FÜR EIN KRAFTFAHRZEUG SOWIE LENKSYSTEM FÜR EIN KRAFTFAHRZEUG**
METHOD FOR OPERATING A STEER-BY-WIRE STEERING SYSTEM FOR A MOTOR VEHICLE, AND STEERING SYSTEM FOR A MOTOR VEHICLE
PROCÉDÉ DESTINÉ À FAIRE FONCTIONNER UN SYSTÈME DE DIRECTION À ORIENTATION PAR CÂBLES POUR UN VÉHICULE AUTOMOBILE ET SYSTÈME DE DIRECTION POUR UN VÉHICULE AUTOMOBILE

(30) Priorität: 19.12.2017 DE 102017223288
(43) Veröffentlichungstag der Anmeldung: 28.10.2020
(73) Patentinhaber: VOLKSWAGEN AKTIENGESELLSCHAFT, 38440 Wolfsburg (DE)
(72) Erfinder: KREIS, Christopher, 38126 Braunschweig (DE); RÜGER, Tobias, 38106 Braunschweig (DE)
(86) Internationale Anmeldenummer: PCT/EP2018/079218
(87) Internationale Veröffentlichungsnummer: WO 2019/120699

(56) Entgegenhaltungen:
- EP-A2- 1 407 959
- DE-A1- 19 912 169
- DE-A1-102008 007 186
- DE-A1-102010 027 356
- US-B2- 7 191 864

## Beschreibung

### Technischer Hintergrund

Die Erfindung betrifft Kraftfahrzeuge mit Lenksystemen, insbesondere Steer-by-Wire-Lenksystemen, insbesondere Maßnahmen zum Bewirken eines realistischen Lenkgefühls beim Lenken des Kraftfahrzeugs.

### Technischer Hintergrund

Herkömmliche Lenksysteme für Kraftfahrzeuge weisen in der Regel eine mechanische Kopplung zwischen dem Lenkrad und den gelenkten Rädern auf. Zur Unterstützung einer von einem Fahrer bewirkten Lenkbewegung weisen derartige Lenksysteme zusätzlich eine elektromechanische Unterstützung auf, die direkt oder indirekt eine zusätzliche Unterstützungskraft auf die Zahnstange des Lenksystems aufbringen, um das Lenken des Kraftfahrzeugs erleichtern.

Zusehends werden Lenksystems durch Steer-by-Wire-Lenksysteme ersetzt, die auf die mechanische Kopplung zwischen Lenkrad und gelenkten Rädern verzichten und stattdessen einen mit dem Lenkrad gekoppelten elektromechanischen Lenkradaktuator und einen mit der Lenkung (d.h. den gelenkten Rädern) mechanisch gekoppelten Lenkungsaktuator für die Lenkung vorsehen. Der Lenkradaktuator dient dazu, ein möglichst authentisches Lenkgefühl durch Aufbringen eines Lenkradmoments zu realisieren. Der Lenkungsaktuator dient dazu, die Lenkstellung der gelenkten Räder, insbesondere durch Stellen einer Zahnstangenposition, einzustellen.

Eine der Bewegung des Lenkrads entsprechende Lenkbewegung wird durch den Lenkungsaktuator bewirkt. Der Lenkradaktuator und der Lenkungsaktuator sind funktional gekoppelt, so dass eine Lenkbewegung am Lenkrad erfasst und an den Lenkungsaktuator weitergegeben wird. Umgekehrt werden während Belastungen, die von den gelenkten Rädern über die Zahnstange auf den Lenkaktuator wirken, als entsprechende Lenkgegenkraft bereitgestellt, um dem Fahrer ein gewohntes Lenkgefühl zu vermitteln. Die Umsetzung des Zustands der Lenkung in ein Lenkradmoment stellt eine besondere Herausforderung zum Vermitteln eines realistischen Lenkgefühls dar, da keine direkte mechanische Rückkopplung zwischen gelenkten Rädern und Lenkrad existiert. Üblicherweise wird bei Steer-by-Wire-Lenksystemen die Berechnung und Regelung des Lenkgefühls auf einem Steuergerät des Lenkradaktuators implementiert und das Stellen der gelenkten Räder sowie die Ermittlung der Zahnstangenkraft und anderer für das Lenkgefühl relevanten Informationen von einem Steuergerät des Lenkaktuators übernommen. Die Daten werden zwischen den beiden Steuergeräten durch einen Kommunikationspfad ausgetauscht. Hierbei ist nachteilig, dass das Lenkradmoment berechnet und künstlich über den Lenkradaktuator eingebracht werden muss, was in der Regel zu einem als synthetisch oder taub wahrgenommenen Lenkgefühl führt. Die Aufteilung der für das Lenkgefühl relevanten Software-Implementierungen auf zwei oder mehrere Steuergeräte kann ebenfalls zu Problemen führen, da insbesondere aufgrund der Kommunikationsverbindung eine Synchronität nicht immer gegeben ist, was sich unmittelbar in einem als träge oder taub empfundenen Lenkgefühl auswirken kann.

Aus der Druckschrift DE 10 2004 006 387 A1 ist ein Verfahren zum Steuern eines Fahrzeugs mit einem elektronischen Lenksystem bekannt. Dabei wird ein Lenkradwinkel, eine Geschwindigkeit und eine Gierrate bzw. Giergeschwindigkeit des Fahrzeugs erfasst und ein Lenkwinkelsignal basierend auf dem Lenkradwinkel und einem Lenkverhältnis erzeugt. Eine Gierbewegungsstörung wird über einen Radwinkel kompensiert, von dem ein auf die Räder aufgebrachtes Drehmoment abhängt.

Aus der Druckschrift DE 10 2004 005 348 A1 ist ein System und Verfahren zur Steuerung eines Steer-by-Wire-Lenksystems bekannt, bei dem ein einstellbares Lenkgefühl durch Bereitstellen der Regelung des Reaktionsmoments am Lenkrad des Kraftfahrzeugs erzeugt wird. Dabei wird das Lenkgefühl quantitativ durch Etablierung einer Beziehung zwischen einem Lenkradreaktionsmoment und dem Lenkradwinkel, Radmoment sowie der Fahrzeuggeschwindigkeit beschrieben.

Die DE 10 2010 027 356 A1 zeigt den Oberbegriff der unabhängigen Ansprüche und offenbart ein Steer-by-Wire-Lenksystem mit Ermitteln eines aufzubringenden Lenkmoments in Abhängigkeit eines Steuergrößen-Sollwerts zum Einstellen eines Lenkwinkels. Weiterer technologischer Hintergrund findet sich in der EP 1 407 959 A2 und der US 7,191,864 B2.

Es ist Aufgabe der vorliegenden Erfindung, ein Steer-by-Wire-Lenksystem und ein Verfahren zu dessen Betrieb zur Verfügung zu stellen, bei dem einem Fahrer ein realistisches Lenkgefühl vermittelt wird.

### Offenbarung der Erfindung

Diese Aufgabe wird durch das Verfahren zum Betreiben eines Steer-by-Wire-Lenksystems gemäß Anspruch 1 sowie durch das Steer-by-Wire-Lenksystem gemäß Anspruch 12 gelöst. Weitere Ausgestaltungen sind in den abhängigen Ansprüchen angegeben.

Gemäß einem ersten Aspekt ist ein Verfahren zum Betreiben eines Steer-by-Wire-Lenksystems vorgesehen, das eine Lenkungseinrichtung mit einem Lenkungsaktuator zur Stellung eines Lenkwinkels von gelenkten Rädern und eine Lenkradeinrichtung zum Beaufschlagen eines Lenkrads mit einem Lenkradmoment aufweist, mit folgenden Schritten:
- Erfassen eines aktuellen Lenkradwinkels;
- Durchführen einer Lenkstellungsregelung abhängig von dem aktuellen Lenkradwinkel und abhängig von einer Ist-Lenkstellung, um als Stellgröße eine Soll-Lenkungsstellgröße zur Ansteuerung des Lenkungsaktuators zu erhalten,
- Bestimmen eines Soll-Lenkradmoments zur Ansteuerung des Lenkradaktuators abhängig von der Soll-Lenkstellungsgröße, wobei das Soll-Lenkradmoment tiefpassgefiltert wird.

Eine Idee des obigen Verfahrens besteht darin, ein verbessertes Lenkgefühl in einem Steer-by-Wire-Lenksystem hervorzurufen, indem ein Soll-Lenkradmoment aus einer Soll-Lenkungsstellgröße für den Lenkungsaktuator, die sich aus einer Positionsregelung der Lenkstellung ergibt, ermittelt wird und in der Lenkradeinrichtung zum Bereitstellen einer geeigneten Rückmeldung an das Lenkrad bereitgestellt wird. Die Lenkradeinrichtung stellt das Soll-Lenkradmoment mithilfe eines Lenkradmomentenreglers ein und bewirkt so ein durch das am Lenkrad gegen das Festhalten des Fahrers wirkende Lenkradhandmoment. Der Verlauf bzw. das dynamische Verhalten des Lenkradhandmoments bestimmt maßgeblich das Lenkgefühl. Durch die Berücksichtigung des aus der Soll-Lenkungsstellgröße bestimmten Soll-Lenkradmoment können äußere Kräfte, die auf die Lenkung, z. B. über die gelenkten Räder auf die Zahnstange, insbesondere durch Fahrbahnunebenheiten auf die Soll-Lenkungsstellgröße der Positionsregelung wirken, implizit berücksichtigt werden, was zu einem besonders realistischen und direkten Lenkgefühl führt.

Weiterhin kann vorgesehen sein, dass der Lenkradwinkel in der Lenkradeinrichtung erfasst und von dieser zur Lenkungseinrichtung kommuniziert wird, wobei die Lenkstellungsregelung in der Lenkungseinrichtung ausgeführt wird, wobei die Soll-Lenkungsstellgröße an die Lenkradeinrichtung kommuniziert wird, um das Soll-Lenkradmoment in der Lenkradeinrichtung zu ermitteln, oder wobei das Soll-Lenkradmoment in der Lenkungseinrichtung ermittelt wird und an die Lenkradeinrichtung übermittelt wird.

Gemäß einer Ausführungsform kann die Lenkstellungsregelung einer Positionsregelung, insbesondere einer PI- oder PID-Regelung, entsprechen, wobei aus dem aktuellen Lenkradwinkel gemäß einer vorgegebenen Übersetzungsfunktion eine Soll-Lenkstellung ermittelt wird, wobei die Lenkstellungsregelung abhängig von einer Regelabweichung zwischen der Soll-Lenkstellung und einer Ist-Lenkstellung durchgeführt wird.

Weiterhin kann der Lenkradaktuator mithilfe einer Lenkradmomentenregelung, die insbesondere einer Motorstromregelung entspricht, angesteuert werden, wobei der Lenkradaktuator mit einem Stellmotormoment angesteuert wird, das als Stellgröße der Lenkradmomentenregelung bereitgestellt wird.

Weiterhin kann die Lenkradmomentenregelung abhängig von einer Regelabweichung zwischen dem Soll-Lenkradmoment und einem Ist-Lenkradmoment durchgeführt werden.

Es kann vorgesehen sein, dass die Soll-Lenkungsstellgröße ein Stellmoment für den Lenkungsaktuator angibt.

Gemäß einer Ausführungsform kann eine Vibrationsfunktion und eine Lenkanschlagsfunktion in der Lenkradeinrichtung durchgeführt werden.

Weiterhin kann die Lenkstellungsregelung eine Vorsteuerung aufweisen, die abhängig von einem aktuellen Lenkradmoment durchgeführt wird, wobei das aktuelle Lenkradmoment einem zwischen Lenkradaktuator und Lenkrad wirkenden Moment entspricht.

Gemäß einer Ausführungsform kann das Soll-Lenkradmoment zur Ansteuerung des Lenkradaktuators abhängig von der Soll-Lenkstellungsgröße mithilfe einer vorgegebenen Übertragungsfunktion bestimmt werden.

Gemäß einem weiteren Aspekt ist ein Steer-by-Wire-Lenksystem vorgesehen, umfassend:
- eine Lenkungseinrichtung mit einem Lenkungsaktuator zur Stellung eines Lenkwinkels von gelenkten Rädern, wobei die Lenkungseinrichtung ausgebildet ist, eine Lenkstellungsregelung abhängig von einem aktuellen Lenkradwinkel und abhängig von einer Ist-Lenkstellung durchzuführen, um als Stellgröße eine Soll-Lenkungsstellgröße zu erhalten und den Lenkungsaktuator abhängig von der Soll-Lenkungsstellgröße anzusteuern, und
- eine Lenkradeinrichtung mit einem Lenkrad und einem Lenkradaktuator, wobei die Lenkradeinrichtung ausgebildet ist, um den Lenkradaktuator mithilfe einer Lenkradmomentenregelung so anzusteuern, dass das Lenkrad mit einem Lenkradmoment beaufschlagt wird, das von einem aus der Soll-Lenkungsstellgröße generierten und tiefpassgefilterten Soll-Lenkradmoment abhängt

### Kurzbeschreibung der Zeichnungen

Ausführungsformen werden nachfolgend anhand der beigefügten Zeichnungen näher erläutert. Es zeigen:
- Figur 1: eine schematische Darstellung eines Steer-by-Wire-Lenksystems für ein Kraftfahrzeug; und
- Figur 2: ein Funktionsdiagramm zur Veranschaulichung der durch das Steer-by-Wire-Lenksystem ausgeführten Funktion zum Bereitstellen eines realistischen Lenkgefühls an einem Lenkrad des Steer-by-Wire-Lenksystems.

### Beschreibung von Ausführungsformen

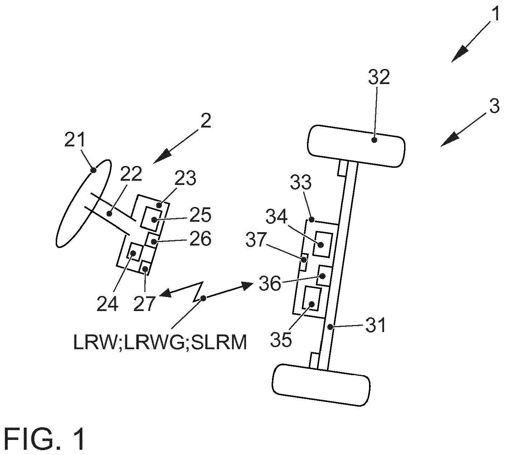

Figur 1 zeigt eine schematische Darstellung eines Steer-by-Wire-Lenksystems 1 für ein Kraftfahrzeug. Das Steer-by-Wire-Lenksystem 1 umfasst eine Lenkradeinrichtung 2 und eine Lenkungseinrichtung 3, die elektrisch aber nicht mechanisch gekoppelt sind.

Die Lenkradeinrichtung 2 umfasst ein Lenkrad 21, das über eine Lenkwelle 22 mit einer Lenkradansteuerung 23 gekoppelt ist. Die Lenkradansteuerung 23 umfasst eine Lenkradsteuereinheit 24 und einen durch die Lenkradsteuereinheit 24 gesteuerten bzw. betriebenen Lenkradaktuator 25. Der Lenkradaktuator 25 ist mit der Lenkwelle 22 gekoppelt, um entsprechend der Ansteuerung durch die Lenkradsteuereinheit 24 ein Lenkradmoment auf die Lenkwelle 22 auszuüben.

Die Lenkradansteuerung 23 weist weiterhin eine Lenkradsensorik 26 auf, um einen Lenkradwinkel und eine Lenkradwinkelgeschwindigkeit zu erfassen. Darüber hinaus kann die Lenkradsensorik 26 ein Ist-Lenkradmoment z.B. mithilfe eines Lenkradmomentensensors oder auch sensorlos basierend auf Motorströmen des Lenkradaktuators 25 ermitteln.

Die Lenkungseinrichtung 3 umfasst eine Zahnstange 31, die mit gelenkten Rädern 32 gekoppelt ist, um durch eine translatorische Bewegung der Zahnstange 31 eine Lenkstellung der gelenkten Räder 32 zu bewirken. Die Lenkstellung entspricht einem Lenkwinkel den die gelenkten Räder 32 bezüglich einer Fahrzeuglängsrichtung einnehmen. Die Zahnstange 31 ist mit einer Lenkungsansteuerung 33 mechanisch gekoppelt, um eine Zahnstangenkraft als eine Lenkungsstellgröße mithilfe eines Lenkungsaktuators 34 auf die Zahnstange 31 auszuüben. Andere Konfigurationen sind denkbar, denen jedoch gemein ist, dass die Lenkungsansteuerung 33 eine Lenkungsstellgröße (in Form einer Zahnstangenkraft, eines Zahnstangenmoments oder eines Radlenkmoments) zur direkten Stellung der Lenkstellung der gelenkten Räder bereitstellt, durch die die Lenkstellung der gelenkten Räder 32 eingestellt werden kann.

Weiterhin weist die Lenkungsansteuerung 33 eine Lenkungssteuereinheit 35 auf, um den Lenkungsaktuator 34 zum Bereitstellen der entsprechenden Soll-Lenkungsstellgröße anzusteuern. Die Lenkungsansteuerung 33 weist weiterhin eine Lenkungssensorik 36 auf, die eine Ist-Zahnstangenposition (die eine Ist-Lenkstellung der gelenkten Räder angibt) und gegebenenfalls eine Zahnstangengeschwindigkeit (die eine Ist-Lenkstellungsänderung der gelenkten Räder angibt) bereitstellt.

Sowohl die Lenkradeinrichtung 2 als auch die Lenkungseinrichtung 3 weisen Kommunikationseinrichtungen 27, 37 auf, die miteinander in Kommunikationsverbindung stehen, so dass Angaben zu dem Lenkradwinkel LRW und der Lenkradwinkelgeschwindigkeit LRWG von der Lenkradeinrichtung 2 zur Lenkungseinrichtung 3 übermittelt werden können. Weiterhin dient die Kommunikationsverbindung dazu, eine Angabe zu einem Soll-Lenkradmoment SLRM von der Lenkungseinrichtung 3 an die Lenkradeinrichtung 2 zu übertragen.

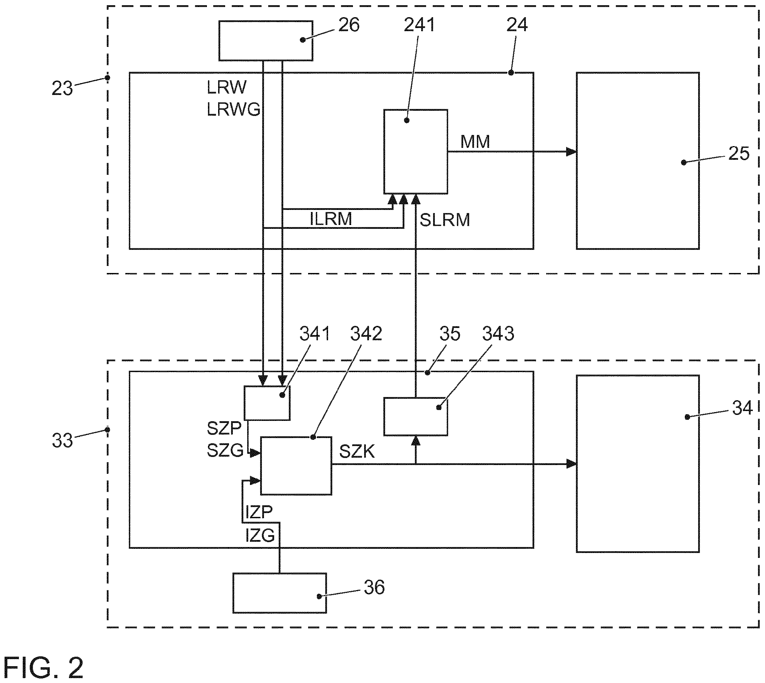

Figur 2 zeigt schematisch die Funktionalität der Lenkradsteuereinheit 24 und der Lenkungssteuereinheit 34, um eine Steer-by-Wire-Lenkung zu realisieren. In der Lenkradsteuereinheit 24 ist ein Lenkradmomentenregler 241 implementiert, dem ein Soll-Lenkradmoment SLRM zugeführt wird, das im vorliegenden Ausführungsbeispiel von dem Lenkungssteuergerät 34 bereitgestellt wird.

Der Lenkradmomentenregler 241 führt eine Lenkradmomentenregelung aus und kann in an sich bekannter Weise als ein PI- bzw. PID-Regler ausgebildet sein und basierend auf einer Regelabweichung, d. h. einem Unterschied zwischen dem Soll-Lenkradmoment SLRM und dem Ist-Lenkradmoment ILRM, ein Stellmotormoment MM generieren. Der Lenkradmomentenregler 241 kann dazu eine Stromregelung umfassen, die dazu dient, den Lenkradaktuator 25 entsprechend dem Stellmotormoment MM anzusteuern und dadurch das von dem Lenkradaktuator 25 generierte Motormoment auf das vorgegebene Soll-Lenkradmoment SLRM bzw. das entsprechende Moment einzustellen.

Weiterhin kann der Lenkradmomentenregler 241 aus der Lenkradsensorik 26 den Lenkradwinkel LRW und eine die Lenkradwinkelgeschwindigkeit LRWG erhalten, um eine Vorsteuerung für die Lenkradmomentenregelung durchzuführen. Die Stellgröße des Lenkradmomentenreglers 241 entspricht einer Angabe zu dem Stellmotormoment MM, das dem Lenkradaktuator 25 in geeigneter Weise zugeführt werden kann. Dort kann das Stellmotormoment MM entsprechend einer geeigneten Motorsteuerung gestellt werden. Insbesondere kann die Angabe zu dem Stellmotormoment MM einer Stromangabe entsprechen. Der Lenkradmomentenregler 241 kann zusätzlich in an sich bekannter Weise eine Reib- und Trägheitskompensation für die Lenkradeinrichtung 2 umfassen.

Der Lenkradwinkel LRW, die Lenkradwinkelgeschwindigkeit LRWG und das Ist-Lenkradmoment ILRM werden von dem Lenkradsteuergerät 24 an das Lenkungssteuergerät 34 kommuniziert. Dort wird in einem Übersetzungsblock 341 entsprechend einer gewünschten Übersetzung dem Lenkradwinkel eine Zahnstangenposition bzw. eine Lenkstellung zugeordnet, die als Soll-Zahnstangenposition SZP (Soll-Lenkstellung) an den Lenkstellungsregler 342 weitergegeben wird. Entsprechend kann in dem Übersetzungsblock 341 die Lenkradwinkelgeschwindigkeit LRWG in eine Soll-Zahnstangengeschwindigkeit SZG (Soll-Lenkstellungsänderung) umgewandelt werden. Diese Größen SZP, SZG werden dem Lenkstellungsregler 342 zugeführt, der eine Lenkstellungsregelung ausführt. Die Lenkstellungsregelung kann einer Positionsregelung der Zahnstangenposition entsprechen.

Der Lenkstellungsregler 342 kann in Form eines PI-, PID- oder sonstigen Reglers ausgebildet sein und kann eine Soll-Lenkungsstellgröße SZK z.B. in Form einer Soll-Zahnstangenkraft für einen Lenkeingriff bereitstellen. Die Soll-Lenkungsstellgröße SZK wird dem Lenkungsaktuator 35 zugeführt, der diese direkt zum Stellen der Zahnstange 31 umsetzt, um eine gewünschte tatsächliche Zahnstangenkraft zu erhalten. Der Umrechnungsblock 341 kann weiterhin zur Umrechnung des aktuellen Lenkradwinkels LRW in eine Zahnstangenposition die Fahrzeuggeschwindigkeit berücksichtigen. Ebenso kann bei der Umrechnung der Lenkradwinkelgeschwindigkeit LRWG in eine Zahnstangengeschwindigkeit ebenfalls die Fahrzeuggeschwindigkeit berücksichtigt werden. Der Lenkstellungsregler 342 kann in an sich bekannter Weise eine Reib- und Trägheitskompensation von Reibungen und Trägheiten der Lenkung umfassen.

Dem Lenkstellungsregler 342 werden weiterhin die über die Lenkungssensorik 36 erfasste Ist-Lenkstellung IZP (z.B. in Form einer Ist- Zahnstangenposition) und ggfs. einer Ist-Lenkstellungsänderung IZG (z.B. in Form einer Ist-Zahnstangengeschwindigkeit) zugeführt, um eine Regelung entsprechend der Regelungsabweichung zwischen der Soll-Lenkstellung SZP und der Ist-Lenkstellung IZP und ggfs. zwischen der Soll-Lenkstellungsänderung SZG und der Ist-Lenkstellungsänderung IZG in an sich bekannter Weise durchzuführen.

Die Stellgröße des Lenkstellungsreglers 342, die Soll-Lenkungsstellgröße (z.B. Soll-Zahnstangenkraft) SZK, wird neben der Ansteuerung des Lenkungsaktuators 35 weiterhin einem Lenkradmoment-Rückmeldungsblock 343 zugeführt.

Der Lenkradmoment-Rückmeldungsblock 343 generiert das Soll-Lenkradmoment SLRM aus der Soll-Lenkungsstellgröße SZK. Die Generierung kann unter einer inversen Anwendung der Übersetzungsfunktion des Übersetzungsblocks 341 und einer (invers berücksichtigten) vorgegebenen Lenkkraft-Unterstützungsfunktion, die eine Abhängigkeit zwischen einem vom Fahrer auf das Lenkrad 21 aufgebrachten Handlenkmoment, das dem Ist-Lenkradmoment ILRM entspricht, und einer Ist-Lenkungsstellgröße abbildet, die einer auf die gelenkten Räder 32 wirkenden tatsächlichen Stellkraft oder tatsächlichem Stellmoment entspricht. Die Lenkkraft-Unterstützungsfunktion kann einer herkömmlichen Lenkkraftverstärkungskennlinie entsprechen. Alternativ kann das Soll-Lenkradmoment SLRM auch durch Verwendung einer anderen vorgegebenen Funktion aus der Soll-Lenkungsstellgröße SZK generiert werden.

In einer alternativen Ausführungsform kann das Ist-Lenkradmoment ILRM auch zur Vorsteuerung des Lenkstellungsregler 342 verwendet werden, wobei das Ist-Lenkradmoment ILRM mit einer Lenkkraft-Unterstützungsfunktion in eine Vorsteuerungs-Lenkungsstellgröße (z.B. in Form einer Vorsteuerungs-Zahnstangenkraft) umgesetzt werden kann.

In dem Lenkradmoment-Rückmeldungsblock 343 kann weiterhin eine (Tiefpass-)Filterung für das Soll-Lenkradmoment SLRM implementiert sein, um insbesondere höherfrequente Änderungen des Soll-Lenkradmoments SLRM dämpfen oder eliminieren zu können. Dies unterstützt die Generierung eines angenehmen Lenkgefühls, da sprunghafte Änderungen des Lenkradmoments verringert oder unterdrückt werden.

Um Verzögerungen der Übertragungsstrecke für den Lenkstellungsreglers 342 zu kompensieren, kann weiterhin vorgesehen sein, die Lenkradwinkelgeschwindigkeit LRWG, die von der Lenkradsteuereinheit 24 an die Lenkungssteuereinheit 35 übertragen wird, von der Lenkungssteuereinheit 35 gemeinsam mit dem Soll-Lenkradmoment SLRM an den Lenkradmomentenregler 241 zurück zu übertragen. Damit kann eine Totzeitkompensation für den gesamten Übertragungsweg realisiert werden, z.B. indem anstelle der unmittelbar aus der Lenkradsensorik 26 erfassten oder abgeleiteten Lenkradwinkelgeschwindigkeit LRWG die über die Kommunikationsverbindung erhaltene Lenkradwinkelgeschwindigkeit LRWG verwendet wird.

Weiterhin können in der Lenkradsteuereinheit 24 Funktionen implementiert sein, die ungeachtet der von der Lenkungssteuereinheit 35 übermittelten Soll-Lenkradmomente SLRM zusätzliche Lenkradmomente realisiert, um beispielsweise eine Lenkradvibration oder einen Lenkanschlag zu implementieren. Insbesondere die Lenkanschlagsfunktion, die ein hohes Anschlags-Lenkradmoment abhängig von der Lenkstellung realisiert, kann aus Bauteilschutzgründen notwendig sein, wenn der Lenkradwinkel z. B. aufgrund von Bauteilwickelfedern oder Kabelverbindungen begrenzt werden muss. Das Anschlags-Lenkradmoment, mit dem eine weitere Bewegung des Lenkrads in einer Richtung begrenzt wird, wird für den Lenkanschlag sehr hoch festgelegt, so dass dieses nicht überlenkbar oder mit erhöhtem Kraftaufwand vom Fahrer überlenkbar ist.

Des Weiteren kann eine Funktion zur aktiven Rückstellung des Lenkrades (ARS-Funktion) in der Lenkungsansteuerung 33 implementiert sein. Diese Funktion realisiert eine Lenkradrückstellung in einen vorgegebenen Ziel-Lenkradwinkel (zumeist eine Mittellage). Das Lenkrad wird dabei durch den Lenkungsaktuator 34 aktiv unter Vorgabe einer Soll-Lenkradwinkelgeschwindigkeit auf eine Zielposition zurückgestellt. Die Soll-Lenkradwinkelgeschwindigkeit kann mittels einer vorgegebenen Kennlinie aus Fahrzeuggeschwindigkeit, Ist-Zahnstangenposition IZP, Ist-Zahnstangengeschwindigkeit IZG sowie das Soll-Lenkradmoment SLRM und ggf. weiteren Eingangsgrößen bestimmt werden. Der Eingriff in den Lenkradaktuator 25 erfolgt durch Vorgabe oder Beeinflussung des Stellmotormomentes an den Lenkradaktuator 25.

Weiterhin kann in dem Lenkradsteuereinheit 24 vorgesehen sein, eine bei einem EPS-System (Electric Power Steering) mechanisch festgelegte Steifigkeit des Lenkradmomentensensors variabel einzustellen. Die Drehmomentenmessung durch den Lenkradmomentensensor erfolgt über die Messung der Verdrehung eines Drehstabes mit definierter Steifigkeit und bekannter Federkonstante. Damit kann dem Lenkradaktuator 25 ein um die jeweilige Drehstabverdrehung verändertes Signal zugeführt werden.

Durch die obige Funktionsstruktur wirken sich auf das Lenksystem 1 einwirkende äußere Kräfte, die z. B. durch Fahrbahnunebenheiten eingebracht werden, auf die Soll-Lenkungsstellgröße SZK des Lenkstellungsreglers 343 aus. Da die Soll-Lenkungsstellgröße SZK die bestimmende Größe des Lenkgefühls ist, werden dadurch äußere Einflüsse auf das Lenksystem 1 implizit berücksichtigt, was zu einem besonders realistischen und direkten Lenkgefühl führt.

### Bezugszeichenliste

- 1: Steer-by-Wire-Lenksystem
- 2: Lenkradeinrichtung
- 21: Lenkrad
- 22: Lenkwelle
- 23: Lenkradansteuerung
- 24: Lenkradsteuereinheit
- 241: Lenkradmomentenregler
- 25: Lenkradaktuator
- 26: Lenkradsensorik
- 3: Lenkungseinrichtung
- 31: Zahnstange
- 32: gelenkte Räder
- 33: Lenkungsansteuerung
- 34: Lenkungsaktuator
- 35: Lenkungssteuereinheit
- 36: Lenkungssensorik
- 27, 37: Kommunikationseinrichtungen
- 25: Lenkradaktuator
- 341: Umrechnungsblock
- 342: Lenkstellungsregler
- 343: Lenkradmoment-Rückmeldungsblock
- SZK: Soll-Lenkungsstellgröße
- LRWG: Lenkradwinkelgeschwindigkeit
- IZP: Ist-Lenkstellung
- IZG: Ist-Lenkstellungsänderung
- SZP: Soll-Lenkstellung
- SLRM: Soll-Lenkradmoment

## Patentansprüche

1. Verfahren zum Betreiben eines Steer-by-Wire-Lenksystems (1) mit einer Lenkungseinrichtung (3) mit einem Lenkungsaktuator (34) zur Stellung eines Lenkwinkels von gelenkten Rädern (32) und einer Lenkradeinrichtung (2) zum Beaufschlagen eines Lenkrads (21) mit einem Lenkradmoment, mit folgenden Schritten:
- Erfassen eines aktuellen Lenkradwinkels (LRW);
- Durchführen einer Lenkstellungsregelung abhängig von dem aktuellen Lenkradwinkel (LRW) und abhängig von einer Ist-Lenkstellung (IZP), um als Stellgröße eine Soll-Lenkungsstellgröße (SZK) zur Ansteuerung des Lenkungsaktuators (34) zu erhalten,
- Bestimmen eines Soll-Lenkradmoments (SLRM) zur Ansteuerung des Lenkradaktuators (25) abhängig von der Soll-Lenkstellungsgröße (SZK),
**dadurch gekennzeichnet, dass**
das Soll-Lenkradmoment (SLRM) tiefpassgefiltert wird.

2. Verfahren nach Anspruch 1, wobei der Lenkradwinkel (LRW) in der Lenkradeinrichtung (2) erfasst und von dieser zur Lenkungseinrichtung (3) kommuniziert wird, wobei die Lenkstellungsregelung in der Lenkungseinrichtung (3) ausgeführt wird, wobei
- die Soll-Lenkungsstellgröße (SZK) an die Lenkradeinrichtung (2) kommuniziert wird, um das Soll-Lenkradmoment (SLRM) in der Lenkradeinrichtung (2) zu ermitteln, oder
- das Soll-Lenkradmoment (SLRM) in der Lenkungseinrichtung (3) ermittelt wird und an die Lenkradeinrichtung (2) übermittelt wird.

3. Verfahren nach Anspruch 1 oder 2, wobei die Lenkstellungsregelung einer Positionsregelung, insbesondere einer PI- oder PID-Regelung, entspricht, wobei aus dem aktuellen Lenkradwinkel (LRW) gemäß einer vorgegebenen Übersetzungsfunktion eine Soll-Lenkstellung (SZP) ermittelt wird, wobei die Lenkstellungsregelung abhängig von einer Regelabweichung zwischen der Soll-Lenkstellung (SZP) und einer Ist-Lenkstellung (IZP) durchgeführt wird.

4. Verfahren nach einem der Ansprüche 1 bis 3, wobei der Lenkradaktuator (25) mithilfe einer Lenkradmomentenregelung, die insbesondere einer Motorstromregelung entspricht, angesteuert wird, wobei der Lenkradaktuator (25) mit einem Stellmotormoment (MM) angesteuert wird, das als Stellgröße der Lenkradmomentenregelung bereitgestellt wird.

5. Verfahren nach Anspruch 4, wobei die Lenkradmomentenregelung abhängig von einer Regelabweichung zwischen dem Soll-Lenkradmoment (SLRM) und einem Ist-Lenkradmoment (ILRM) durchgeführt wird.

6. Verfahren nach einem der Ansprüche 1 bis 5, wobei die Soll-Lenkungsstellgröße (SZK) ein Stellmoment für den Lenkungsaktuator (34) angibt.

7. Verfahren nach einem der Ansprüche 1 bis 6, wobei eine Vibrationsfunkton und eine Lenkanschlagsfunktion in der Lenkradeinrichtung (2) durchführbar sind.

8. Verfahren nach einem der Ansprüche 1 bis 7, wobei die Lenkstellungsregelung eine Vorsteuerung aufweist, die abhängig von einem aktuellen Lenkradmoment (ILRM) durchgeführt wird, wobei das aktuelle Lenkradmoment (ILRM) einem zwischen Lenkradaktuator (25) und Lenkrad (21) wirkenden Moment entspricht.

9. Verfahren nach einem der Ansprüche 1 bis 7, wobei das Soll-Lenkradmoment (SLRM) zur Ansteuerung des Lenkradaktuators (25) abhängig von der Soll-Lenkstellungsgröße (SZK) mithilfe einer vorgegebenen Übertragungsfunktion bestimmt wird.

10. Verfahren nach einem der vorangehenden Ansprüche, wobei das Soll-Lenkradmoment (SLRM) unter Anwendung einer invers berücksichtigten Lenkkraft-Unterstützungsfunktion bestimmt wird, wobei die Lenkkraft-Unterstützungsfunktion eine Abhängigkeit zwischen einem vom Fahrer auf das Lenkrad (21) aufgebrachten Handlenkmoment und einer Ist-Lenkstellungsgröße abbildet, die einer auf die gelenkten Räder (32) wirkenden tatsächlichen Stellkraft oder einem tatsächlichen Stellmoment entspricht.

11. Verfahren nach einem der vorangehenden Ansprüche, wobei eine Lenkradgeschwindigkeit (LRWG) von einer den Lenkradaktuator (25) ansteuernden Lenkradsteuereinheit (24) an eine Lenkungssteuereinheit (35) übertragen wird und von der Lenkungssteuereinheit (35) gemeinsam mit dem Soll-Lenkradmoment (SLRM) an einen Lenkradmomentenregler (241) der Lenkradsteuereinheit (24) zurückübertragen wird.

12. Steer-by-Wire-Lenksystem (1) umfassend:
- eine Lenkungseinrichtung (3) mit einem Lenkungsaktuator (34) zur Stellung eines Lenkwinkels von gelenkten Rädern (32), wobei die Lenkungseinrichtung (3) ausgebildet ist, eine Lenkstellungsregelung abhängig von einem aktuellen Lenkradwinkel (LRW) und abhängig von einer Ist-Lenkstellung (IZP) durchzuführen, um als Stellgröße eine Soll-Lenkungsstellgröße (SZK) zur Ansteuerung des Lenkungsaktuators (34) zu erhalten, und
- eine Lenkradeinrichtung (2) mit einem Lenkrad (21) und einem Lenkradaktuator (25), wobei die Lenkradeinrichtung (2) ausgebildet ist, um den Lenkradaktuator (25) mithilfe einer Lenkradmomentenregelung so anzusteuern, dass das Lenkrad (21) mit einem Lenkradmoment beaufschlagt wird,
**dadurch gekennzeichnet, dass**
das Lenkradmoment von einem aus der Soll-Lenkungsstellgröße (SZK) generierten und tiefpassgefilterten Soll-Lenkradmoment (SLRM) abhängt.

## Claims

1. Method for operating a steer-by-wire steering system (1) comprising a steering device (3) with a steering actuator (34) for setting a steering angle of steered wheels (32), and a steering wheel device (2) for applying a steering wheel torque to a steering wheel (21), having the following steps:
- detecting a current steering wheel angle (LRW);
- controlling a steering position as a function of the current steering wheel angle (LRW) and as a function of a current steering position (IZP) in order to obtain a target steering control variable (SZK) as a control variable for driving the steering actuator (34),
- determining a target steering wheel torque (SLRM) for driving the steering wheel actuator (25) as a function of the target steering control variable (SZK),
**characterized in that**
the target steering wheel torque (SLRM) is low-pass filtered.

2. Method according to Claim 1, wherein the steering wheel angle (LRW) is detected in the steering wheel device (2) and is communicated by the latter to the steering device (3), wherein the steering position control is carried out in the steering device (3), wherein
- the target steering control variable (SZK) is communicated to the steering wheel device (2) in order to determine the target steering wheel torque (SLRM) in the steering wheel device (2), or
- the target steering wheel torque (SLRM) is determined in the steering device (3) and is transmitted to the steering wheel device (2).

3. Method according to Claim 1 or 2, wherein the steering position control corresponds to position control, in particular PI or PID control, wherein a target steering position (SZP) is determined from the current steering wheel angle (LRW) according to a predefined transfer function, wherein the steering position control is carried out as a function of a control deviation between the target steering position (SZP) and a current steering position (IZP).

4. Method according to one of Claims 1 to 3, wherein the steering wheel actuator (25) is driven with the aid of steering wheel torque control which, in particular, corresponds to motor current control, wherein the steering wheel actuator (25) is driven with a servo motor torque (MM), which is provided to the steering wheel torque control as a control variable.

5. Method according to Claim 4, wherein the steering wheel torque control is carried out as a function of a control deviation between the target steering wheel torque (SLRM) and a current steering wheel torque (ILRM).

6. Method according to one of Claims 1 to 5, wherein the target steering control variable (SZK) indicates an actuating torque for the steering actuator (34).

7. Method according to one of Claims 1 to 6, wherein a vibration function and a steering lock function can be carried out in the steering wheel device (2).

8. Method according to one of Claims 1 to 7, wherein the steering position control includes feed-forward control, which is carried out as a function of a current steering wheel torque (ILRM), wherein the current steering wheel torque (ILRM) corresponds to a torque acting between the steering wheel actuator (25) and the steering wheel (21).

9. Method according to one of Claims 1 to 7, wherein the target steering wheel torque (SLRM) for driving the steering wheel actuator (25) is determined as a function of the target steering control variable (SZK) with the aid of a predefined transfer function.

10. Method according to one of the preceding claims, wherein the target steering wheel torque (SLRM) is determined by using an inversely considered steering force assistance function, wherein the steering force assistance function maps a relationship between a manual steering torque applied to the steering wheel (21) by the driver and a current steering control variable, which corresponds to an actual actuating force acting on the steered wheels (32) or an actual actuating torque.

11. Method according to one of the preceding claims, wherein a steering wheel speed (LRWG) is transmitted from a steering wheel control unit (24) driving the steering wheel actuator (25) to a steering control unit (35) and is transmitted back to a steering wheel torque controller (241) of the steering wheel control unit (24) from the steering control unit (35) together with the target steering wheel torque (SLRM).

12. Steer-by-wire steering system (1) comprising:
- a steering device (3) having a steering actuator (34) for setting a steering angle of steered wheels (32), wherein the steering device (3) is designed to control a steering position as a function of a current steering wheel angle (LRW) and as a function of a current steering position (IZP) in order to obtain a target steering control variable (SZK) as a control variable for driving the steering actuator (34), and
- a steering wheel device (2) having a steering wheel (21) and a steering wheel actuator (25), wherein the steering wheel device (2) is designed to drive the steering wheel actuator (25) with the aid of steering wheel torque control such that a steering wheel torque is applied to the steering wheel (21),
**characterized in that**
the steering wheel torque depends on a target steering wheel torque (SLRM) generated from the target steering control variable (SZK) and low-pass filtered.

## Revendications

1. Procédé d'exploitation d'un système de direction Steer-by-Wire (1) comprenant un dispositif de direction (3) avec un actionneur de direction (34) pour régler un angle de direction de roues dirigées (32) et un dispositif de volant de direction (2) pour solliciter un volant de direction (21) par un couple de volant de direction, comprenant les étapes suivantes :
- la détection d'un angle de volant de direction actuel (LRW) ;
- la réalisation d'une régulation de la position de direction en fonction de l'angle de volant de direction actuel (LRW) et en fonction d'une position de direction réelle (IZP), afin d'obtenir en tant que grandeur de réglage une grandeur de réglage de direction de consigne (SZK) pour la commande de l'actionneur de direction (34),
- la détermination d'un couple de volant de direction de consigne (SLRM) pour la commande de l'actionneur de volant de direction (25) en fonction de la grandeur de réglage de direction de consigne (SZK),
**caractérisé en ce que**
le couple de volant de direction de consigne (SLRM) est filtré par un filtre passe-bas.

2. Procédé selon la revendication 1, dans lequel l'angle de volant de direction (LRW) est détecté dans le dispositif de volant de direction (2) et est communiqué par celui-ci au dispositif de direction (3), dans lequel la régulation de la position de direction est exécutée dans le dispositif de direction (3), dans lequel
- la grandeur de réglage de direction de consigne (SZK) est communiquée au dispositif de volant de direction (2) afin de déterminer le couple de volant de direction de consigne (SLRM) dans le dispositif de volant de direction (2), ou
- le couple de volant de direction de consigne (SLRM) est déterminé dans le dispositif de direction (3) et transmis au dispositif de volant de direction (2).

3. Procédé selon la revendication 1 ou 2, dans lequel la régulation de la position de direction correspond à une régulation de position, notamment à une régulation PI ou PID, dans lequel une position de direction de consigne (SZP) est déterminée à partir de l'angle de volant de direction actuel (LRW) selon une fonction de conversion prédéfinie, dans lequel la régulation de la position de direction est réalisée en fonction d'un écart de régulation entre la position de direction de consigne (SZP) et une position de direction réelle (IZP).

4. Procédé selon l'une quelconque des revendications 1 à 3, dans lequel l'actionneur de volant de direction (25) est commandé à l'aide d'une régulation de couple de volant de direction, qui correspond notamment à une régulation de courant de moteur, dans lequel l'actionneur de volant de direction (25) est commandé avec un couple de servomoteur (MM), qui est mis à disposition en tant que grandeur de réglage de la régulation du couple de volant de direction.

5. Procédé selon la revendication 4, dans lequel la régulation du couple de volant de direction est réalisée en fonction d'un écart de régulation entre le couple de volant de direction de consigne (SLRM) et un couple de volant de direction réel (ILRM).

6. Procédé selon l'une quelconque des revendications 1 à 5, dans lequel la grandeur de réglage de direction de consigne (SZK) indique un couple de réglage pour l'actionneur de direction (34).

7. Procédé selon l'une quelconque des revendications 1 à 6, dans lequel une fonction de vibration et une fonction de butée de direction peuvent être réalisées dans le dispositif de volant de direction (2).

8. Procédé selon l'une quelconque des revendications 1 à 7, dans lequel la régulation de la position de direction présente une commande préliminaire qui est réalisée en fonction d'un couple de volant de direction actuel (ILRM), dans lequel le couple de volant de direction actuel (ILRM) correspond à un couple agissant entre l'actionneur de volant de direction (25) et le volant de direction (21).

9. Procédé selon l'une quelconque des revendications 1 à 7, dans lequel le couple de volant de direction de consigne (SLRM) pour la commande de l'actionneur de volant de direction (25) est déterminé en fonction de la grandeur de réglage de direction de consigne (SZK) à l'aide d'une fonction de transfert prédéfinie.

10. Procédé selon l'une quelconque des revendications précédentes, dans lequel le couple de volant de direction de consigne (SLRM) est déterminé en utilisant une fonction d'assistance de force de direction prise en compte de manière inverse, dans lequel la fonction d'assistance de force de direction représente une dépendance entre un couple de direction manuel appliqué par le conducteur sur le volant de direction (21) et une grandeur de réglage de direction réelle qui correspond à une force de réglage effective agissant sur les roues dirigées (32) ou à un couple de réglage effectif.

11. Procédé selon l'une quelconque des revendications précédentes, dans lequel une vitesse de volant de direction (LRWG) est transférée par une unité de commande de volant de direction (24) commandant l'actionneur de volant de direction (25) à une unité de commande de direction (35) et est retransférée par l'unité de commande de direction (35), conjointement avec le couple de volant de direction de consigne (SLRM), à un régulateur de couple de volant de direction (241) de l'unité de commande de volant de direction (24).

12. Système de direction Steer-by-Wire (1) comprenant :
- un dispositif de direction (3) avec un actionneur de direction (34) pour régler un angle de direction de roues dirigées (32), le dispositif de direction (3) étant configuré pour réaliser une régulation de la position de direction en fonction d'un angle de volant de direction actuel (LRW) et en fonction d'une position de direction réelle (IZP), afin d'obtenir en tant que grandeur de réglage une grandeur de réglage de direction de consigne (SZK) pour la commande de l'actionneur de direction (34), et
- un dispositif de volant de direction (2) avec un volant de direction (21) et un actionneur de volant de direction (25), le dispositif de volant de direction (2) étant configuré pour commander l'actionneur de volant de direction (25) à l'aide d'une régulation du couple de volant de direction de telle sorte que le volant de direction (21) soit sollicité par un couple de volant de direction,
**caractérisé en ce que**
le couple de volant de direction dépend d'un couple de volant de direction de consigne (SLRM) généré à partir de la grandeur de réglage de direction de consigne (SZK) et filtré par un filtre passe-bas.
